# EUROPEAN PATENT SPECIFICATION

(11) **EP 3 095 882 B1**
(45) Date of publication and mention of the grant of the patent: **22.09.2021**
(21) Application number: 15167926.3
(22) Date of filing: 18.05.2015
(51) Int. Cl.: B29C 59/00, C21D 6/00, C21D 9/48, C21D 9/46, C21D 8/04, C21D 8/02, B21B 3/02, B21B 1/22, C21D 1/26

(54) **METHOD FOR PRODUCING A STAINLESS STEEL SHEET WITH MODIFIED VISUAL CHARACTERISTICS**
VERFAHREN ZUR HERSTELLUNG EINES EDELSTAHLBLECHS MIT MODIFIZIERTEN VISUELLEN EIGENSCHAFTEN
PROCÉDÉ DE PRODUCTION D'UNE FEUILLE D'ACIER INOXYDABLE AVEC MODIFICATION DES CARACTÉRISTIQUES VISUELLES

(43) Date of publication of application: 23.11.2016
(73) Proprietor: Outokumpu Oyj, 00180 Helsinki (FI)
(72) Inventor: Teipel, Jörn, D-50735 KÖLN (DE); Wiemer, Dirk, D-40593 DÛSSELDORF (DE); Zoppke, Lutz, D-35410 HUNGEN (DE); Vogel, Patrick, D-35075 GLADENBACH (DE); Jääger, Andreas, D-35688 DILLENBURG (DE); Burkhard, Arnold, D-35688 DILLENBURG (DE); Wörster, Frank, D-57250 NETPHEN (DE); Weg, Michael, D-35716 DIETZHÖLZTAL (DE)

(56) References cited:
- EP-A1- 2 692 452
- WO-A1-2014/096180
- JP-A- H06 182 401
- JP-B2- 2 974 597
- KR-A- 20010 065 235
- KR-B1- 960 006 031
- US-A- 3 556 874
- US-A- 4 978 583

## Description

The present invention relates to a method for producing a patterned stainless steel sheet with modified visual characteristics in the wavelength area of visible light, such as low reflectance and low glare with the inherent sparkle of the stainless steel being at least maintained.

It is common that the surface of a stainless steel sheet is made to have good visual characteristics. For instance the CN publication 102925649 describes a manufacture method of austenitic stainless steels with good polishing performance wherein the austenitic stainless steel is treated by carrying-out hot rolling, carrying out hot-rolling annealing, carrying out acid washing after hot-rolling annealing, carrying out cold-rolling, carrying out cold-rolling annealing, carrying out acid washing after cold-rolling annealing and refining in order to have a decorative sheet.

The object of the JP publication 2000144257 is to improve the gloss of a stainless steel surface. The manufacture method of the JP publication 2000144257 comprises a cold rolling process of the austenitic stainless steel strip and further a bright annealing process so that the grain size of the stainless steel strip is 0,0134 - 0,027 mm. After bright annealing the strip is temper rolled and pressed, and an electrolytic polishing process is carried out for the pressed product which is further treated in order to improve the gloss of the surface by eliminating fine unevenness of the surface and achieving the smoothness and mirror polishing of the surface.

The JP publication 2011110594 relates to a method for manufacturing a cold-rolled ferritic stainless steel strip excellent in surface gloss. The surface finish applying cold rolling, annealing or further pickling is performed by temper rolling with the rolls which are ground to the average roughness Rₐ of 0,003 - 0,010 micrometre in the roll width direction after applying chromium plating to the surfaces of the steel rolls and thus without lubrication.

In the CN publication 102925649, in the JP publication 2000144257 and in the JP publication 2011110594 a separate washing, polishing or plating process step is required in order to achieve the final product of the method.

The KR publication 20120059970 describes a manufacturing process for ferritic stainless steel which method includes an annealing process, the following temper roll mill process, surface finishing and multi-stage shape correcting process. The glossiness of the ferritic stainless steel at the light reflection angle of 60 degrees is controlled to the range of 150 - 420. The multi-stage shape correcting process makes this manufacturing process more complicated and thus the manufacturing costs are high.

The US publication 2014017517 relates to a stainless steel plate which is manufactured by performing temper rolling using a dull roller after the finish cold rolling and bright annealing. After the last temper rolling, the plate may also be passed through degreasing and refining processes such as a tension leveler and slit to the extent that the surface properties are not affected. The total cold rolling ratio until bright annealing was set 70 % or more. The stainless steel plate is applicable as exterior building material, interior building material, automotive steel plate, commercial kitchen equipment, outer plate for home appliances, outer plate for kitchen equipment and kitchen accessories, and precision equipment components and electronic device components such as computer members, digital equipment members, HDD (hard disk drive) members and solar cell substrate material. According to the US publication 2014017517 the washability is improved by controlling the micro-pits that are the cause of adherence of dirt, and temper rolling is performed under conditions in which the opening and occurrence of micro-pits are restrained. Therefore, it is possible to improve the anti-glare property while maintaining washability. The object of this US publication 2014017517 is thus to keep the plate as even as possible and, therefore, there are decorative structures, such as patterns, on the surface of the plate.

JP H06 182401 A discloses a method of manufacturing of a dull finished stainless steel sheet with improved antidazzle property. US 4 978 583 A discloses forming an uneven dulled pattern on a metal strip rolling with a patterned roll. KR 960 006 031 B1 discloses a manufacturing process of the stainless steel plate with two embossing faces. KR 2001 0065235 A discloses a method for manufacturing a non-gloss embossed stainless steel strip. KR 2001 0065235 A describes also a conventional process, where secondary bright annealing is performed after embossing to maintain a surface colour and surface roughness of the non-gloss embossed steel strip.

The object of the present invention is to eliminate some drawbacks of the prior art and to establish a method for producing a patterned stainless steel sheet with modified visual characteristics in the wavelength area of visible light, such as low reflectance and low glare but remaining the inherent sparkle of the stainless steel and liveliness. The essential features of the invention and the preferred embodiments of the invention are enlisted in the appended claims.

According to the present invention the material for the method is first cold deformed, such as cold rolled, in order to have a stainless steel sheet having a desired reduction degree and thus a desired thickness range of 0,3 - 3,5 mm for further process steps. The cold deformed stainless steel sheet is pretreated by at least one heat treatment step, before the stainless steel sheet is transferred into a mill for patterning. A further heat treatment step is carried out for the patterned stainless steel sheet before refining the sheet for the final product having the desired surface properties with visual characteristics in the wavelength area (380 - 800 nanometre) of visible light, such as low reflectance and low glare as well as the inherent sparkle of the stainless steel.

The pretreatment of the deformed stainless steel sheet before the patterning treatment is carried out by the heat treatment at the temperature range of 900 - 1200 °C, preferably at the temperature range of 1050 - 1200 °C. The heat treatment can be an annealing and pickling step or a bright annealing step. The heat treated stainless steel sheet is skin-pass rolled before the patterning operation. The skin-pass rolling is carried out with a dull roll at least on the top surface of the stainless steel sheet.

During the patterning operation, a pattern roll is used at least on one side of the stainless steel sheet in order to carry out the patterning process of a desired design onto the surface of the stainless steel sheet. When the patterning operation is only focussed on one side of the stainless steel sheet a smooth roll is utilized on the opposite side. The emboss depth on the side of the pattern roll is up to 100 micrometre.

The patterned stainless steel sheet is further heat treated at the temperature range of 900 - 1200 °C, preferably at the temperature range of 1050 - 1200 °C by carrying out an annealing and pickling operation or a bright annealing operation. After the heat treatment the patterned sheet can be used as a final product of the method. It is also possible that the heat treated pattern sheet is refined, such as tension levelled, in order to have for instance a desired flatness, before the sheet in accordance with the method of the invention is ready as a final product.

The stainless steel sheet treated according to the method of the invention shows a superior surface homogeneity and has slightly matt but sparkling on each of nuggets of the surface. The surface shows a lower or equal specular reflectance than the value of less than 25 % in the prior art, because due to higher sparkling together with the homogeneity of the surface this characteristic is achieved.

The stainless steel sheet treated according to the method of the invention further shows a specular reflectance of less than 10 % in the visible wavelength range, but still shows a sparkling, lively appearance. These desired properties can be achieved when in connection with the heat treatment for the deformed sheet a mechanical blasting process is carried out in order to have a very matt blasted surface on which patterns are formed during the patterning process step.

The skin-pass rolling for the deformed and heat treated stainless steel sheet is carried out with a textured roll before the patterning operation. The skin-pass rolling achieves a roughness Rₐ of 0,5 - 2,5 micrometre for the surface which leads to a lower reflectance of the final product and due to the additional texture on the surface in order to increase sparkling in the final product of the method according to the invention.

The method for producing a patterned stainless steel sheet according to the invention is advantageously at least at intervals continuous, preferably essentially constantly continuous. Therefore, the deformed stainless steel sheet having the desired thickness can be transferred through all the process steps continuously that means lower manufacturing costs and uniform quality, such as homogeneity of the surface for the final product.

The stainless steel sheet to be used in the method of the invention can be austenitic stainless steel, ferritic stainless steel or ferritic austenitic stainless steel. The stainless steel sheet treated in accordance with the method of the present invention is applicable as exterior building material, interior building material, automotive steel plate, commercial kitchen equipment, outer plate for home appliances, outer plate for kitchen equipment and kitchen accessories.

## Claims

1. Method for producing a patterned stainless steel sheet with improved visual characteristics in the wavelength area of visible light, said method comprising the steps of cold deforming a stainless steel sheet to provide a deformed stainless steel sheet having a thickness of 0.3 - 3.5 mm for further process steps, heat treating the sheet at a temperature in the range of 900 - 1200 °C, patterning with a patterning roll having an emboss depth of up to 100 µm on at least one side of the stainless steel sheet in a patterning process to provide a patterned sheet, and heat treating the patterned sheet at a temperature in the range of 900-1200°C, **characterized in that** before the patterning process the deformed and heat treated sheet is skin-pass rolled with a textured roll to obtain a roughness Ra of 0.5 - 2.5 µm or blasted.

2. Method according to the claim 1, wherein the heat treatments are carried on at the temperature range 1150 - 1200 °C.

3. Method according to the claim 1 or 2, wherein the heat treatments are carried out as an annealing and pickling process.

4. Method according to the claim 1 or 2, wherein the heat treatments are carried out as a bright annealing process.

5. Method according to any of the preceding claims, wherein the stainless steel sheet is made of austenitic stainless steel.

6. Method according to any of the preceding claims, wherein the stainless steel sheet is made of ferritic stainless steel.

7. Method according to any of the preceding claims, wherein the stainless steel sheet is made of ferritic austenitic stainless steel.

8. Method according to any of the preceding claims, wherein the stainless steel sheet is applicable as exterior building material, interior building material, automotive steel plate, commercial kitchen equipment, outer plate for home appliances, outer plate for kitchen equipment and kitchen accessories.

## Patentansprüche

1. Verfahren zur Herstellung eines strukturierten rostfreien Stahlblechs mit verbesserten visuellen Eigenschaften im Wellenlängenbereich des sichtbaren Lichts, wobei das Verfahren die Schritte der Kaltverformung eines rostfreien Stahlblechs umfasst, um ein verformtes rostfreies Stahlblech mit einer Dicke von 0,3 - 3,5 mm für weitere Prozessschritte zu liefern, Wärmebehandlung des Blechs bei einer Temperatur im Bereich von 900 - 1200 °C, Strukturierung mit einer Strukturierungswalze mit einer Prägetiefe von bis zu 100 µm auf mindestens einer Seite des Edelstahlblechs in einem Strukturierungsprozess, um ein strukturiertes Blech zu erhalten, und Wärmebehandlung des strukturierten Blechs bei einer Temperatur im Bereich von 900-1200 °C, **dadurch gekennzeichnet, dass** das verformte und wärmebehandelte Blech vor dem Strukturierungsprozess mit einer Strukturwalze im Dressiergang gewalzt wird, um eine Rauheit Ra von 0,5 - 2,5 µm zu erhalten, oder gestrahlt wird.

2. Verfahren nach Anspruch 1, wobei die Wärmebehandlungen im Temperaturbereich von 1150 - 1200 °C fortgeführt werden.

3. Verfahren nach Anspruch 1 oder 2, wobei die Wärmebehandlungen als Glüh- und Beizprozess ausgeführt werden.

4. Verfahren nach Anspruch 1 oder 2, wobei die Wärmebehandlungen als Blankglühprozess ausgeführt werden.

5. Verfahren nach einem der vorhergehenden Ansprüche, wobei das rostfreie Stahlblech aus austenitischem rostfreiem Stahl hergestellt wird.

6. Verfahren nach einem der vorhergehenden Ansprüche, wobei das rostfreie Stahlblech aus ferritischem rostfreiem Stahl hergestellt wird.

7. Verfahren nach einem der vorhergehenden Ansprüche, wobei das rostfreie Stahlblech aus ferritischem rostfreiem Stahl hergestellt wird.

8. Verfahren nach einem der vorhergehenden Ansprüche, wobei das rostfreie Stahlblech angewendet werden kann als Außenbaumaterial, Innenbaumaterial, Automobilstahlblech, für kommerzielle Küchenausstattung, Außenblech für Haushaltsgeräte, Außenblech für Küchengeräte und Küchenzubehör.

## Revendications

1. Procédé de production d'une feuille en acier inoxydable profilée avec des caractéristiques visuelles améliorées dans la zone de longueur d'onde de la lumière visible, ledit procédé comprenant les étapes de déformation à froid d'une feuille en acier inoxydable pour fournir une feuille en acier inoxydable déformée ayant une épaisseur de 0,3 à 3,5 mm pour d'autres étapes du processus, le traitement à la chaleur de la feuille à une température dans la plage de 900 à 1200 °C, le profilage avec un rouleau de profilage ayant une profondeur d'embossage de jusqu'à 100 µm sur au moins un côté de la feuille en acier inoxydable dans un processus de profilage pour fournir une feuille profilée, et le traitement à la chaleur de la feuille profilée à une température dans la plage de 900 à 1200 °C, **caractérisé en ce qu'**avant le processus de profilage la feuille déformée et traitée à la chaleur est roulée en écrouissage avec un rouleau texturé pour obtenir une rugosité Ra de 0,5 à 2,5 µm ou soufflée.

2. Procédé selon la revendication 1, dans lequel les traitements à la chaleur sont réalisés à la plage de température de 1150 à 1200 °C.

3. Procédé selon la revendication 1 ou 2, dans lequel les traitements à la chaleur sont réalisés comme un processus de recuit et de décapage.

4. Procédé selon la revendication 1 ou 2, dans lequel les traitements à la chaleur sont réalisés comme un processus de recuit brillant.

5. Procédé selon l'une quelconque des revendications précédentes, dans lequel la feuille en acier inoxydable est constituée d'acier inoxydable austénitique.

6. Procédé selon l'une quelconque des revendications précédentes, dans lequel la feuille en acier inoxydable est constituée d'acier inoxydable ferritique.

7. Procédé selon l'une quelconque des revendications précédentes, dans lequel la feuille en acier inoxydable est constituée d'acier inoxydable austénitique ferritique.

8. Procédé selon l'une quelconque des revendications précédentes, dans lequel la feuille en acier inoxydable est applicable comme matériau de construction extérieur, matériau de construction intérieur, plaque d'acier automobile, équipement de cuisine commercial, plaque externe pour applications domestiques, plaque externe pour équipement de cuisine et accessoires de cuisine.
